# EUROPEAN PATENT SPECIFICATION

(11) **EP 3 343 559 B1**
(45) Date of publication and mention of the grant of the patent: **14.08.2019**
(21) Application number: 17208986.4
(22) Date of filing: 20.12.2017
(51) Int. Cl.: G10L 21/02, G10L 21/0216

(54) **DE-REVERBERATION CONTROL METHOD AND DEVICE THEREOF**
NACHHALLUNTERDRÜCKUNGSSTEUERUNGSVERFAHREN UND VORRICHTUNG DAFÜR
PROCÉDÉ DE COMMANDE DÉ-RÉVERBERATION ET DISPOSITIF ASSOCIÉ

(30) Priority: 29.12.2016 CN 201611242997
(43) Date of publication of application: 04.07.2018
(73) Proprietor: Beijing Xiaoniao Tingting Technology Co., Ltd, 100191 Beijing (CN)
(72) Inventor: LOU, Shasha, Beijing, 100191 (CN); LI, Bo, Beijing, 100191 (CN)
(74) Representative: Gevers Patents

(56) References cited:
- EP-A1- 3 002 754
- WO-A1-2004/038697
- WO-A1-2014/147442
- US-A1- 2005 047 611

## Description

### TECHNICAL FIELD

The present disclosure relates to the technical field of voice interaction, and in particular to a de-reverberation control method and device of sound producing equipment.

### BACKGROUND

With the development of intelligent technology, many manufactures start to consider providing a voice recognition function in intelligent products. For example, computers, mobile phones, home appliances and other products are required to support wireless connection, remote control, voice interaction, and so on.

However, when a user performs voice interaction with the intelligent product, the sound made by the user is collected by the intelligent product after being reflected by a room, and thus reverberation is generated. Since the reverberation contains a signal similar to a correct signal, and has a relatively large interference on extraction of voice information and voice feature, it is desired to perform de-reverberation. The existing de-reverberation solution fails to be well applied to a scenario where the user interacts with the intelligent product. The existing de-reverberation solution either has a low de-reverberation degree which causes large reverberation residue, or has a high de-reverberation degree which attenuates a user's voice. Accordingly, recognition accuracy of a voice command may be severely reduced and thus the product fails to respond timely to a command from the user, leading to a poor interaction experience.

In the prior art, document WO 2004/038697 A1 discloses a speech control unit which is arranged to recognize speech of a user who is moving in an environment.

### SUMMARY

The object of the present invention is achieved by the independent claims. Specific embodiments are defined in the dependent claims.

The disclosure is intended to provide a de-reverberation control method and device of sound producing equipment, for solving the problem of low recognition accuracy of a voice command and poor interaction experience in the current products.

To this end, the technical solutions of the disclosure are implemented as follows.

According to an aspect, the disclosure provides a de-reverberation control method of sound producing equipment, which includes that:
when a piece of equipment performs audio playing, a voice signal from a user is collected in real time;
a relative position of the user with respect to the equipment and acoustic parameters of a room environment in which the user and the equipment are located, are acquired;
according to one or more of the relative position and the acoustic parameters, a corresponding microphone in the equipment is selected, and a corresponding voice enhancement mode is called to perform de-reverberation; and
a voice command word from the user is acquired, and the equipment is controlled to perform a function corresponding to the voice command, as a response to the user.

According to another aspect, the disclosure provides a de-reverberation control device of sound producing equipment, which includes:
a voice collector, which is arranged to, when the equipment performs audio playing, collect the voice signal from the user in real time;
a factor acquiring unit, which is arranged to acquire the relative position of the user with respect to the equipment and the acoustic parameters of the room environment in which the equipment is located;
a de-reverberation performing unit, which is arranged to, according to one or more of the relative position and the acoustic parameters, select the corresponding microphone in the equipment, and call the corresponding voice enhancement mode to perform the de-reverberation; and
a command executing unit, which is arranged to acquire the voice command word from the user, and control the equipment to perform the corresponding function, as a response to the user.

By means of the technical solutions of the disclosure, when the voice enhancement mode is adjusted based on the relative position of the user with respect to the equipment, the user's voice can be enhanced or protected better while the de-reverberation is performed, and voice recognition accuracy can be improved; when the de-reverberation is performed based on the acoustic parameters associated with the user and the equipment, different voice enhancement modes can be adopted according to the change of acoustics environments indicated by the acoustic parameters to ensure an appropriate de-reverberation degree, thereby solving the problem of large reverberation residue or attenuated user's voice in the current solution, and achieving higher recognition accuracy. It can be understood that when the de-reverberation is performed based on both user information and environment information, the voice recognition accuracy can be further improved.

### BRIEF DESCRIPTION OF DRAWINGS

FIG. 1 is a schematic diagram of a de-reverberation control method of sound producing equipment provided by an embodiment of the disclosure;
FIG. 2 is a structure diagram of a de-reverberation control device of sound producing equipment provided by another embodiment of the disclosure; and
FIG. 3 is a structure diagram of another de-reverberation control device of sound producing equipment provided by another embodiment of the disclosure.

### DETAILED DESCRIPTION

For making the aim, the technical solutions and the advantages of the disclosure more clear, implementation modes of the disclosure are further elaborated below in combination with the accompanying drawings.

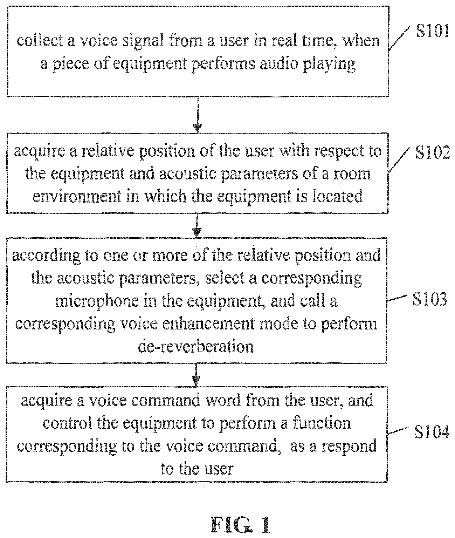

An embodiment of the disclosure provides a de-reverberation control method of sound producing equipment. As shown in FIG. 1, the method includes the following actions.

In S101, when a piece of equipment performs audio playing, a voice signal from a user is collected in real time.

In S102, a relative position of the user with respect to the equipment and acoustic parameters of a room environment in which the user and the equipment are located, are acquired.

In the embodiment, when a factor (also called a reference quality) for controlling de-reverberation is selected, a comprehensive factor containing both user information and space information is derived based on two basic factors, namely a user-related quantity and a space-related quantity.

For example, a direction and distance of the user relative to the equipment is acquired as the relative position which is the user-related quantity. The acoustic parameters may belong to either the basic factor or the comprehensive factor. For example, reverberation time (T60, T30, T20 or the like) of a room environment belongs to a space-related quantity. A direct-to-reverberant ratio of user's voice (the ratio of direct sound to reverberant sound in the user's voice collected by the equipment), and an intelligibility (e.g. C50) obtained by the equipment using its built-in microphone array to collect the user's voice and then calculate, are associated with the user and the space, and belong to the comprehensive factor.

In S103, according to one or more of the relative position and the acoustic parameters, a corresponding microphone in the equipment is selected, and a corresponding voice enhancement mode is called to perform de-reverberation.

S104: a voice command word from the user is acquired, and the equipment is controlled to perform a function corresponding to the voice command, as a respond to the user.

From the above, by means of the technical solutions of the disclosure, when the voice enhancement mode is adjusted based on the relative position of the user with respect to the equipment, the user's voice can be enhanced or protected better while the de-reverberation is performed, and the voice recognition accuracy can be improved. When the de-reverberation is performed based on the acoustic parameters associated with the user and the equipment, different voice enhancement modes can be adopted according to the change of acoustics environments indicated by the acoustic parameters to ensure an appropriate de-reverberation degree. Therefore, the problem of large reverberation residue or attenuated user's voice in the current solution may be solved, and thus a higher recognition accuracy may be obtained. It can be understood that when the de-reverberation is performed based on both user information and environment information, the voice recognition accuracy can be further improved.

In another embodiment based on the embodiment shown in FIG. 1, in order to match the feature of voice interaction between the user and the equipment more, while S102 is performed, the method may further include but not limited to the following actions. When a wake-up word is detected from the voice signal collected by the equipment, the equipment is controlled to stop the audio playing. Alternatively, when the wake-up word is detected from the voice signal, a volume at which the equipment performs the audio playing is lowered to be below a volume threshold.

In this way, according to the feature of a scenario of voice interaction between the user and the equipment, when the wake-up word is detected, it is judged that the user has a new requirement at this point, then the equipment is controlled to stop the current audios, and a new command of the user is waited, which not only contributes to further improving the recognition accuracy of the new command, but also conforms to a usage habit of the scenario of voice interaction, thereby improving interaction experience.

The action of controlling the audio playing and S102 are performed at the same time, thereby shortening the response time and responding to the user more timely.

Furthermore, in S104, the command word includes commands of controlling built-in functions of the equipment. For example, the command word may include the command of controlling the play volume of a speaker of the equipment, the command of controlling the equipment to move, the command of controlling an application program installed in the equipment, and the like.

Since relative to the wake-up words, the number of command words is large, and the content of the command words is complex, in order to reduce the equipment load and improve the recognition accuracy, a cloud processing mode is adopted for the command word in the this embodiment. After the equipment stops the audio playing, the voice signal sent by the user after the wake-up word is collected. The voice signal is transmitted to a cloud server, the cloud server performs feature matching on the voice signal, and acquires the command word from the voice signal upon that the feature matching is successful. The command word returned by the cloud server is received, and the equipment is controlled to perform the corresponding function according to the command word, so as to correspondingly respond to the user.

In another embodiment of the disclosure, how to perform the de-reverberation based on the user-related quantity and the space-related quantity is described in detail. Other embodiments may be referred for other content of the solution.

The sound producing equipment in each embodiment of the disclosure is a sound producing equipment a microphone array. The microphone array is used to collect the user's voice and perform de-reverberation. In a process of performing de-reverberation according to the basic factor or the comprehensive factor, the microphones selected according to product requirements and usage scenarios are different. It is possible to select either all the microphones in the microphone array or a part of microphones in the microphone array. For example, if the user is nearby, and the voice is loud and clear, merely using a part of microphones can achieve the effect of using all the microphones, then there is no need to use all the microphones. If the user is far away, and the voice is weak and the reverberation is heavy, it is required to use all the microphones to process.

For a scenario where multiple factors are required to perform de-reverberation, in the present embodiment, priorities are respectively set for factors included in the relative position and the acoustic parameters. From a highest priority to a lowest priority, the de-reverberation is performed based on the factors one by one. Alternatively, the de-reverberation is performed only based on one or more of the factors which has a priority higher than a predetermined level. Adopting the processing mode based on the priorities can not only provide a targeted voice enhancement mode according to different scenarios to achieve a better de-reverberation effect, but can reduce calculation complexity and shorten the response time. It should be noted that, de-reverberation may also be performed based on all the factors without considering the priorities.

For example, the priority of the relative position is set to be higher than the priority of the acoustic parameter, and the priority of the direction is set to be higher than the priority of the distance in the relative position. During the de-reverberation, the direction is first adopted, then the distance is adopted, and finally the acoustic parameter is adopted. Alternatively, a level value and a level threshold are set for the priority of each factor. For example, if the level value of the relative position is 5, the level value of the acoustic parameter is 3, and the level threshold is 4, when the factor with the priority higher than 4 is adopted according to a rule, the de-reverberation is performed only using the relative position. It can be understood that multiple priority levels can be respectively set for the factors in the acoustic parameters, and the processing mode similar to the above is adopted.

In the present embodiment, the de-reverberation may be performed in the following implementations.

### A first implementation

According to the direction of the user relative to the equipment, the corresponding microphone in the equipment is selected, and the voice direction enhanced by the voice enhancement mode is adjusted to perform the de-reverberation.

### A second implementation

When the distance of the user relative to the equipment is less than a first distance threshold, a de-reverberation degree and a voice amplification function in the voice enhancement mode are reduced to a first enhancement level. When the distance of the user relative to the equipment is greater than a second distance threshold, the de-reverberation degree and the voice amplification function in the voice enhancement mode are improved to a second enhancement level. When the distance of the user relative to the equipment is greater than the first distance threshold and less than the second distance threshold, the de-reverberation degree and the voice amplification function in the voice enhancement mode are adjusted to be between the first enhancement level and the second enhancement level.

When the user is close to the equipment, the de-reverberation degree and the amplification degree of user's voice are reduced. When the user is far away from the equipment, the de-reverberation degree and the amplification degree of user's voice are improved.

### A third implementation

When a reverberation degree in the room environment indicated by the acoustic parameters is greater than a first reverberation threshold, the de-reverberation degree in the voice enhancement mode is improved to a first degree. When the reverberation degree in the room environment indicated by the acoustic parameters is less than a second reverberation threshold, the de-reverberation degree in the voice enhancement mode is reduced to a second degree. When the reverberation degree in the room environment indicated by the acoustic parameters is greater than the first reverberation threshold and less than the second reverberation threshold, the de-reverberation degree in the voice enhancement mode is adjusted to be between the first degree and the second degree.

When the reverberation degree in the room environment is greater, the de-reverberation degree is improved. When the reverberation degree in the room is lesser, the de-reverberation degree is reduced.

Only the operations, closely related to the solution, in the voice enhancement mode are described above, but there are more operations; for example, equalization processing will be performed on the voice signal.

The specific values of the reverberation threshold and the reverberation degree are not strictly limited here, but can vary in a specific range.

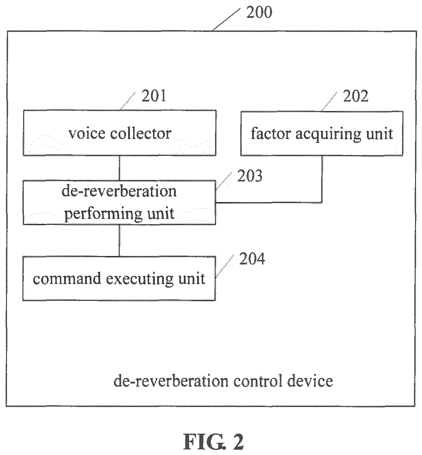

Another embodiment of the disclosure provides a de-reverberation control device 200 of sound producing equipment. As shown in FIG. 2, the device 200 includes a voice collector 201, a factor acquiring unit 202, a de-reverberation performing unit 203 and a command executing unit 204.

The voice collector 201 is arranged to, when the equipment performs audio playing, collect the voice signal from the user in real time. The voice collector can be implemented by the microphone array in the equipment.

The factor acquiring unit 202 is arranged to acquire the relative position of the user with respect to the equipment and the acoustic parameters of the room environment in which the equipment is located.

The de-reverberation performing unit 203 is arranged to, according to one or more of the relative position and the acoustic parameters, select the corresponding microphone in the equipment, and call the corresponding voice enhancement mode to perform the de-reverberation.

The command executing unit 204 is arranged to acquire the voice command word from the user, and control the equipment to perform the corresponding function, as a respond to the user.

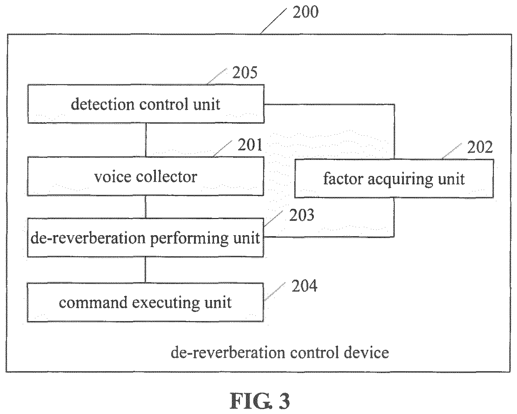

Based on the embodiment shown in FIG. 2, furthermore, as shown in FIG. 3, the device 200 further includes a detection control unit 205. The detection control unit is arranged to, while acquiring the relative position of the user with respect to the equipment and the acoustic parameters of the room environment in which the equipment is located, when the wake-up word is detected from the voice signal, control the equipment to stop the audio playing, or when the wake-up word is detected from the voice signal, lower the volume at which the equipment performs the audio playing to be below the volume threshold.

The de-reverberation performing unit 203 is arranged to respectively set priorities for the factors included in the relative position and the acoustic parameters, and from a highest priority to a lowest priority, perform the de-reverberation based on the factors one by one, or perform the de-reverberation only based on one or more of the factors which has a priority higher than the predetermined level.

The de-reverberation performing unit 203 is specifically arranged to perform at least one of the following three actions:
according to the direction of the user relative to the equipment, select the corresponding microphone in the equipment, and adjust the voice direction enhanced by the voice enhancement mode to perform the de-reverberation; or
when the distance of the user relative to the equipment is less than the first distance threshold, reduce the de-reverberation degree and the voice amplification function in the voice enhancement mode to the first enhancement level; when the distance of the user relative to the equipment is greater than the second distance threshold, improve the de-reverberation degree and the voice amplification function in the voice enhancement mode to the second enhancement level; when the distance of the user relative to the equipment is greater than the first distance threshold and less than the second distance threshold, adjust the de-reverberation degree and the voice amplification function in the voice enhancement mode to be between the first enhancement level and the second enhancement level; or
when the reverberation degree in the room environment indicated by the acoustic parameters is greater than the first reverberation threshold, improve the de-reverberation degree in the voice enhancement mode to the first degree; when the reverberation degree in the room environment indicated by the acoustic parameters is less than the second reverberation threshold, reduce the de-reverberation degree in the voice enhancement mode to the second degree; when the reverberation degree in the room environment indicated by the acoustic parameters is greater than the first reverberation threshold and less than the second reverberation threshold, adjust the de-reverberation degree in the voice enhancement mode to be between the first degree and the second degree.

The command executing unit 204 is specifically arranged to collect the voice signal sent by the user after the wake-up word, transmit the voice signal to the cloud server. The cloud server performs feature matching on the voice signal, acquires the command word from the voice signal upon that the feature matching is successful, receive the command word returned by the cloud server, and control the equipment to perform the corresponding function according to the command word.

The de-reverberation control device 200 of sound producing equipment is set in the sound producing equipment. The sound producing equipment includes, but is not limited to intelligent portable terminals and intelligence household electrical appliances. The intelligent portable terminals at least include a smart watch, a smart phone or a smart speaker. The intelligence household electrical appliances at least include a smart television, a smart air-conditioner or a smart recharge socket.

The specific working mode of each unit in the embodiment of the device can refer to the related content of the embodiment of the disclosure, so it will not be repeated here.

From the above, by means of the technical solutions of the disclosure, when the voice enhancement mode is adjusted based on the relative position of the user with respect to the equipment, the user's voice can be enhanced or protected better while the de-reverberation is performed, and the voice recognition accuracy can be improved. When the de-reverberation is performed based on the acoustic parameters associated with the user and the equipment, different voice enhancement modes can be adopted according to the change of acoustics environments indicated by the acoustic parameters to ensure an appropriate de-reverberation degree, thereby solving the problem of large reverberation residue or attenuated user's voice in the current solution, and achieving higher recognition accuracy. It can be understood that when the de-reverberation is performed based on both user information and environment information, the voice recognition accuracy can be further improved.

Those ordinary skilled in the art can understand that all or a part of steps of the above embodiments can be performed by using a computer program flow. The computer program can be stored in a computer readable storage medium. The computer program, when executed on corresponding hardware platforms (such as system, installation, equipment and device) performs one of or a combination of the steps in the method.

Optionally, all or a part of steps of the above embodiments can also be performed by using an integrated circuit. These steps may be respectively made into integrated circuit modules. Alternatively, multiple modules or steps may be made into a single integrated circuit module.

The devices/function modules/function units in the above embodiment can be realized by using a general computing device. The devices/function modules/function units can be either integrated on a single computing device, or distributed on a network composed of multiple computing devices.

When the devices/function modules/function units in the above embodiment are realized in form of software function module and sold or used as an independent product, they can be stored in a computer-readable storage medium. The computer-readable storage medium may be an ROM, RAM, a magnetic disk or a compact disk.

The above is only the preferred embodiment of the disclosure and not intended to limit the disclosure. The scope of the invention is defined in the appended claims.

## Claims

1. A de-reverberation control method of a piece of sound producing equipment, the method comprising:
collecting a voice signal from a user in real time when the equipment performs audio playing;
acquiring a relative position of the user with respect to the equipment and acoustic parameters of a room environment in which the user and the equipment are located;
according to one or more of the relative position and the acoustic parameters, selecting a corresponding microphone in the equipment, and calling a corresponding voice enhancement mode to perform de-reverberation;
acquiring a voice command word from the user, and controlling the equipment to perform a function corresponding to the voice command, as a response to the user.

2. The method according to claim 1, wherein while acquiring the relative position of the user with respect to the equipment and the acoustic parameters of the room environment in which the user and the equipment are located, the method further comprises:
controlling the equipment to stop the audio playing when a wake-up word is detected from the voice signal; or
lowering a volume at which the equipment performs the audio playing, to be below a volume threshold when the wake-up word is detected from the voice signal.

3. The method according to claim 1, wherein acquiring a relative position of the user with respect to the equipment and acoustic parameters of the room environment in which the user and the equipment are located, comprises:
acquiring a direction and distance of the user relative to the equipment as the relative position; and
acquiring a reverberation time, a direct-to-reverberant ratio of the user's voice and an intelligibility index of a voice collected by the equipment in the room environment in which the equipment and user are located, as the acoustic parameters.

4. The method according to claim 1, wherein according to one or more of the relative position and the acoustic parameters, selecting the corresponding microphone in the equipment, and calling the corresponding voice enhancement mode to perform the de-reverberation comprises:
according to one or more of the relative position and the acoustic parameters, selecting all microphones in the equipment as currently used microphones, and calling a corresponding voice enhancement mode to perform the de-reverberation; or,
according to one or more of the relative position and the acoustic parameters, selecting a part of microphones in the equipment as the currently used microphones, and calling a corresponding voice enhancement mode to perform the de-reverberation.

5. The method according to claim 3, wherein according to one or more of the relative position and the acoustic parameters, selecting the corresponding microphone in the equipment, and calling the corresponding voice enhancement mode to perform the de-reverberation comprises:
setting priorities respectively for factors comprising the relative position and the acoustic parameters;
from a highest priority to a lowest priority, performing the de-reverberation based on the factors one by one; or, performing the de-reverberation only based on one or more of the factors which has a priority higher than a predetermined level.

6. The method according to claim 4, wherein according to one or more of the relative position and the acoustic parameters, selecting the corresponding microphone in the equipment, and calling the corresponding voice enhancement mode to perform the de-reverberation comprises at least one of the following three actions:
according to the direction of the user relative to the equipment, selecting the corresponding microphone in the equipment, and adjusting a sound direction enhanced by the voice enhancement mode to perform the de-reverberation; or,
when the distance of the user relative to the equipment is less than a first distance threshold, reducing a de-reverberation degree and a voice amplification function in the voice enhancement mode to a first enhancement level; when the distance of the user relative to the equipment is greater than a second distance threshold, improving the de-reverberation degree and the voice amplification function in the voice enhancement mode to a second enhancement level; when the distance of the user relative to the equipment is greater than the first distance threshold and less than the second distance threshold, adjusting the de-reverberation degree and the voice amplification function in the voice enhancement mode to be between the first enhancement level and the second enhancement level; or,
when a reverberation degree in the room environment indicated by the acoustic parameters is greater than a first reverberation threshold, improving the de-reverberation degree in the voice enhancement mode to a first degree; when the reverberation degree in the room environment indicated by the acoustic parameters is less than a second reverberation threshold, reducing the de-reverberation degree in the voice enhancement mode to a second degree; when the reverberation degree in the room environment indicated by the acoustic parameters is greater than the first reverberation threshold and less than the second reverberation threshold, adjusting the de-reverberation degree in the voice enhancement mode to be between the first degree and the second degree.

7. The method according to claim 2, further comprising:
collecting a voice signal sent by the user after the wake-up word;
transmitting the voice signal to a cloud server which performs feature matching on the voice signal and acquires the command word from the voice signal upon that the feature matching is successful; and
receiving the command word returned by the cloud server, and controlling the equipment to perform the corresponding function according to the command word.

8. A de-reverberation control device of a piece of sound producing equipment, the device comprising:
a voice collector, which is arranged to, when the equipment performs audio playing, collect a voice signal from a user in real time;
a factor acquiring unit, which is arranged to acquire a relative position of the user with respect to the equipment and acoustic parameters of a room environment in which the equipment is located;
a de-reverberation performing unit, which is arranged to, according to one or more of the relative position and the acoustic parameters, select a corresponding microphone in the equipment, and call a corresponding voice enhancement mode to perform de-reverberation; and
a command executing unit, which is arranged to acquire a voice command word from the user, and control the equipment to perform a function corresponding to the voice command, as a response to the user.

9. The device according to claim 8, further comprising:
a detection control unit, which is arranged to, while acquiring the relative position of the user with respect to the equipment and the acoustic parameters of the room environment in which the equipment is located:
when a wake-up word is detected from the voice signal, control the equipment to stop the audio playing; or
when the wake-up word is detected from the voice signal, lower a volume at which the equipment performs the audio playing, to be below a volume threshold.

10. The device according to claim 8, wherein the factor acquiring unit is further arranged to:
acquire a direction and distance of the user relative to the equipment as the relative position; and
acquire a reverberation time, a direct-to-reverberant ratio of the user's voice and an intelligibility index of a voice collected by the equipment in the room environment in which the equipment and user are located, as the acoustic parameters.

11. The device according to claim 8, wherein the de-reverberation performing unit is further arranged to:
according to one or more of the relative position and the acoustic parameters, select all microphones in the equipment as currently used microphones, and call a corresponding voice enhancement mode to perform the de-reverberation; or,
according to one or more of the relative position and the acoustic parameters, select a part of microphones in the equipment as the currently used microphones, and call a corresponding voice enhancement mode to perform the de-reverberation.

12. The device according to claim 10, wherein the de-reverberation performing unit is further arranged to:
set priorities respectively for factors comprising the relative position and the acoustic parameters;
from a highest priority to a lowest priority, perform the de-reverberation based on the factors one by one; or, perform the de-reverberation only based on one or more of the factors which has a priority higher than a predetermined level.

13. The device according to claim 11, wherein the de-reverberation performing unit is arranged to perform at least one of the following three operations:
according to the direction of the user relative to the equipment, select the corresponding microphone in the equipment, and adjust a sound direction enhanced by the voice enhancement mode to perform the de-reverberation; or
when the distance of the user relative to the equipment is less than a first distance threshold, reduce a de-reverberation degree and a voice amplification function in the voice enhancement mode to a first enhancement level; when the distance of the user relative to the equipment is greater than a second distance threshold, improve the de-reverberation degree and the voice amplification function in the voice enhancement mode to a second enhancement level; when the distance of the user relative to the equipment is greater than the first distance threshold and less than the second distance threshold, adjust the de-reverberation degree and the voice amplification function in the voice enhancement mode to be between the first enhancement level and the second enhancement level; or
when a reverberation degree in the room environment indicated by the acoustic parameters is greater than a first reverberation threshold, improve the de-reverberation degree in the voice enhancement mode to a first degree; when the reverberation degree in the room environment indicated by the acoustic parameters is less than a second reverberation threshold, reduce the de-reverberation degree in the voice enhancement mode to a second degree; when the reverberation degree in the room environment indicated by the acoustic parameters is greater than the first reverberation threshold and less than the second reverberation threshold, adjust the de-reverberation degree in the voice enhancement mode to be between the first degree and the second degree.

14. The device according to claim 9, wherein
the voice collector is further arranged to collect a voice signal sent by the user after the wake-up word,
and wherein the command executing unit is further arranged to:
transmit the voice signal to a cloud server which performs feature matching on the voice signal and acquires the command word from the voice signal upon that the feature matching is successful; and
receive the command word returned by the cloud server, and control the equipment to perform the corresponding function according to the command word.

15. A non-transitory computer readable storage medium, in which a computer executable instruction is stored; the computer executable instruction, when executed by a computer, causes the computer to perform the de-reverberation control method according to any one of claims 1-7.

## Patentansprüche

1. Ein Enthallungssteuerungsverfahren eines Teils einer Schallerzeugungsausrüstung, wobei das Verfahren Folgendes umfasst:
Sammeln eines Sprachsignals von einem Benutzer in Echtzeit, wenn die Ausrüstung Audiowiedergabe ausführt;
Erfassen einer relativen Position des Benutzers bezüglich der Ausrüstung und akustischer Parameter einer Raumumgebung, in der sich der Benutzer und die Ausrüstung befinden;
nach einer oder mehreren der relativen Position und der akustischen Parameter, Auswählen eines entsprechenden Mikrofons in der Ausrüstung, und Abrufen eines entsprechenden Sprachverbesserungsmodus, um Enthallen auszuführen;
Erfassen eines Sprachbefehlsworts von dem Benutzer und Steuern der Ausrüstung, um eine Funktion auszuführen, die dem Sprachbefehl entspricht, als eine Reaktion auf den Benutzer.

2. Das Verfahren nach Anspruch 1, wobei während des Erfassens der relativen Position des Benutzers bezüglich der Ausrüstung und der akustischen Parameter der Raumumgebung, in der sich der Benutzer und die Ausrüstung befinden, das Verfahren weiter Folgendes umfasst:
Steuern der Ausrüstung, um die Audiowiedergabe zu stoppen, wenn ein Aufweckwort aus dem Sprachsignal detektiert wird; oder
Reduzieren einer Lautstärke, mit der die Ausrüstung die Audiowiedergabe ausführt, um unter einem Lautstärkeschwellenwert zu liegen, wenn das Aufweckwort aus dem Sprachsignal detektiert wird.

3. Das Verfahren nach Anspruch 1, wobei das Erfassen einer relativen Position des Benutzers bezüglich der Ausrüstung und der akustischen Parameter der Raumumgebung, in der sich der Benutzer und die Ausrüstung befinden, Folgendes umfasst:
Erfassen einer Richtung und eines Abstands des Benutzers bezüglich der Ausrüstung als die relative Position; und
Erfassen einer Nachhallzeit eines Direkt-zu-Nachhall-Verhältnisses der Sprache des Benutzers und eines Verständlichkeitsindex einer Sprache, die von der Ausrüstung in der Raumumgebung, in der sich die Ausrüstung und der Benutzer befinden, gesammelt wird, als die akustischen Parameter.

4. Das Verfahren nach Anspruch 1, wobei nach einer oder mehrerer der relativen Position und der akustischen Parameter das Auswählen eines entsprechenden Mikrofons in der Ausrüstung und das Abrufen des entsprechenden Sprachverbesserungsmodus zum Ausführen des Enthallens Folgendes umfasst:
nach einer oder mehrerer der relativen Position und der akustischen Parameter, Auswählen aller Mikrofone in der Ausrüstung als aktuell verwendete Mikrofone und Abrufen eines entsprechenden Sprachverbesserungsmodus, um das Enthallen auszuführen; oder
nach einer oder mehrerer der relativen Position und der akustischen Parameter, Auswählen eines Teils von Mikrofonen in der Ausrüstung als die aktuell verwendeten Mikrofone, und Abrufen eines entsprechenden Sprachverbesserungsmodus, um das Enthalten auszuführen.

5. Das Verfahren nach Anspruch 3, wobei nach einer oder mehrerer der relativen Positionen und akustischen Parameter das Auswählen des entsprechenden Mikrofons in der Ausrüstung und das Abrufen des entsprechenden Sprachverbesserungsmodus zum Ausführen des Enthallens Folgendes umfasst:
Einstellen von Prioritäten jeweils für Faktoren, die die relative Position und die akustischen Parameter umfassen;
von einer höchsten Priorität zu einer niedrigsten Priorität Ausführen des Enthallens basierend auf den Faktoren einer nach dem anderen; oder, Ausführen des Enthallens nur basierend auf einem oder mehreren der Faktoren, die eine Priorität aufweisen, die höher ist als ein vorbestimmtes Niveau.

6. Das Verfahren nach Anspruch 4, wobei nach einer oder mehrerer der relativen Position und akustischen Parameter das Auswählen des entsprechenden Mikrofons in der Ausrüstung und das Abrufen des entsprechenden Sprachverbesserungsmodus zum Ausführen des Enthallens mindestens eine der drei folgenden Aktionen umfasst:
nach der Richtung des Benutzers bezüglich der Ausrüstung, Auswählen des entsprechenden Mikrofons in der Ausrüstung und Anpassen einer Schallrichtung, die von dem Sprachverbesserungsmodus verbessert wird, um das Enthallen auszuführen; oder
wenn der Abstand des Benutzers bezüglich der Ausrüstung kleiner ist als ein erster Abstandsschwellenwert, Reduzieren eines Enthallungsgrads und einer Sprachverstärkungsfunktion in dem Sprachverbesserungsmodus auf ein erstes Verbesserungsniveau; wenn der Abstand des Benutzers bezüglich der Ausrüstung größer ist als ein zweiter Abstandsschwellenwert, Verbessern des Enthallungsgrads und der Sprachverstärkungsfunktion in dem Sprachverbesserungsmodus auf ein zweites Verbesserungsniveau; wenn der Abstand des Benutzers bezüglich der Ausrüstung größer ist als der erste Abstandsschwellenwert und kleiner als der zweite Abstandsschwellenwert, Anpassen des Enthallungsgrads und der Sprachverstärkungsfunktion in dem Sprachverbesserungsmodus derart, dass er zwischen dem ersten Verbesserungsniveau und dem zweiten Verbesserungsniveau liegt; oder
wenn ein Nachhallgrad in der Raumumgebung, die von den akustischen Parametern angegeben wird, größer ist als ein erster Nachhallschwellenwert, Verbessern des Enthallungsgrads in dem Sprachverbesserungsmodus auf einen ersten Grad; wenn der Nachhallgrad in der Raumumgebung, die von den akustischen Parametern angegeben wird, kleiner ist als ein zweiter Nachhallschwellenwert, Reduzieren des Enthallungsgrads in dem Sprachverbesserungsmodus auf einen zweiten Grad; wenn der Nachhallgrad in der Raumumgebung, die von den akustischen Parametern angegeben wird, größer ist als der erste Nachhallschwellenwert und kleiner als der zweite Nachhallschwellenwert, Anpassen des Enthallungsgrads in dem Sprachverbesserungsmodus derart, dass er zwischen dem ersten Grad und dem zweiten Grad liegt.

7. Das Verfahren nach Anspruch 2, das weiter Folgendes umfasst:
Sammeln eines Sprachsignals, das von dem Benutzer nach dem Aufweckwort gesendet wird;
Übertragen des Sprachsignals zu einem Cloud-Server, der Merkmalzuordnung auf dem Sprachsignal ausführt und das Befehlswort aus dem Sprachsignal, auf dem die Merkmalzuordnung erfolgreich ist, erfasst; und
Empfangen des Befehlsworts, das von dem Cloud-Server zurückgegeben wird, und Steuern der Ausrüstung, um die entsprechende Funktion nach dem Befehlswort auszuführen.

8. Eine Enthallungssteuerungsvorrichtung eines Teils einer Schallerzeugungsausrüstung, wobei die Vorrichtung Folgendes umfasst:
einen Sprachkollektor, der eingerichtet ist, um, wenn die Ausrüstung Audiowiedergabe ausführt, ein Sprachsignal von einem Benutzer in Echtzeit zu sammeln;
eine Faktorerfassungseinheit, die eingerichtet ist, um eine relative Position des Benutzers bezüglich der Ausrüstung und akustischer Parameter einer Raumumgebung, in der sich die Ausrüstung befindet, zu erfassen;
eine Enthallungsausführungseinheit, die eingerichtet ist, um nach einer oder mehreren der relativen Position und der akustischen Parameter ein entsprechendes Mikrofon in der Ausrüstung auszuwählen und einen entsprechenden Sprachverbesserungsmodus abzurufen, um das Enthallen auszuführen; und
eine Befehlsausführungseinheit, die eingerichtet ist, um ein Sprachbefehlswort von dem Benutzer zu erfassen und die Ausrüstung zu steuern, um eine Funktion auszuführen, die dem Sprachbefehl entspricht, als eine Reaktion auf den Benutzer.

9. Die Vorrichtung nach Anspruch 8, die weiter Folgendes umfasst:
eine Detektionssteuerungseinheit, die eingerichtet ist, um während des Erfassens der relativen Position des Benutzers bezüglich der Ausrüstung und der akustischen Parametern der Raumumgebung, in der sich die Ausrüstung befindet:
wenn ein Aufweckwort aus dem Sprachsignal erfasst wird, die Ausrüstung zu steuern, um die Audiowiedergabe zu stoppen; oder
wenn das Aufweckwort aus dem Sprachsignal detektiert wird, eine Lautstärke, mit der die Ausrüstung die Audiowiedergabe ausführt, unter einen Lautstärkeschwellenwert zu senken.

10. Die Vorrichtung nach Anspruch 8, wobei die Faktorerfassungseinheit weiter eingerichtet ist, um:
eine Richtung und einen Abstand des Benutzers bezüglich der Ausrüstung als die relative Position zu erfassen; und
eine Nachhallzeit eines Direkt-zu-Nachhall-Verhältnisses der Sprache des Benutzers und eines Verständlichkeitsindex einer Sprache, die von der Ausrüstung in der Raumumgebung, in der sich die Ausrüstung und der Benutzer befinden, gesammelt wird, als die akustischen Parameter zu erfassen.

11. Die Vorrichtung nach Anspruch 8, wobei die Enthallungsausführeinheit weiter eingerichtet ist, um:
nach einer oder mehrerer der relativen Position und der akustischen Parameter, alle Mikrofone der Ausrüstung als aktuell verwendete Mikrofone auszuwählen und einen entsprechenden Sprachverstärkungsmodus abzurufen, um das Enthalten auszuführen; oder,
nach einer oder mehrerer der relativen Position und der akustischen Parameter, einen Teil von Mikrofonen in der Ausrüstung als die aktuell verwendeten Mikrofone auszuwählen und einen entsprechenden Sprachverstärkungsmodus abzurufen, um das Enthallen auszuführen.

12. Die Vorrichtung nach Anspruch 10, wobei die Enthallungsausführungseinheit weiter eingerichtet ist, um:
Prioritäten jeweils für Faktoren, die die relative Position und die akustischen Parameter umfassen, einzustellen;
von einer höchsten Priorität zu einer niedrigsten Priorität das Enthallen basierend auf den Faktoren einer nach dem anderen auszuführen; oder das Enthallen nur basierend auf einem oder mehrerer der Faktoren, die eine Priorität aufweisen, die höher ist als ein vorbestimmtes Niveau, auszuführen.

13. Die Vorrichtung nach Anspruch 11, wobei die Enthallungsausführungseinheit eingerichtet ist, um mindestens einen der drei folgenden Vorgänge auszuführen:
nach der Richtung des Benutzers bezüglich der Ausrüstung, das entsprechende Mikrofon in der Ausrüstung auszuwählen und eine Schallrichtung, die von dem Sprachverbesserungsmodus verbessert wird, anzupassen, um das Enthallen auszuführen; oder
wenn der Abstand des Benutzers bezüglich der Ausrüstung kleiner ist als ein erster Abstandsschwellenwert, Reduzieren eines Enthallungsgrads und einer Sprachverstärkungsfunktion in dem Sprachverbesserungsmodus auf ein erstes Verbesserungsniveau; wenn der Abstand des Benutzers bezüglich der Ausrüstung größer ist als ein zweiter Abstandsschwellenwert, Verbessern des Enthallungsgrads und der Sprachverstärkungsfunktion in dem Sprachverbesserungsmodus auf ein zweites Verbesserungsniveau; wenn der Abstand des Benutzers bezüglich der Ausrüstung größer ist als der erste Abstandsschwellenwert und kleiner als der zweite Abstandsschwellenwert, Anpassen des Enthallungsgrads und der Sprachverstärkungsfunktion in dem Sprachverbesserungsmodus derart, dass er zwischen dem ersten Verbesserungsniveau und dem zweiten Verbesserungsniveau liegt; oder
wenn ein Nachhallgrad in der Raumumgebung, die von den akustischen Parametern angegeben wird, größer ist als ein erster Nachhallschwellenwert, Verbessern des Enthallungsgrads in dem Sprachverbesserungsmodus auf einen ersten Grad; wenn der Nachhallgrad in der Raumumgebung, die von den akustischen Parametern angegeben wird, kleiner ist als ein zweiter Nachhallschwellenwert, Reduzieren des Enthallungsgrads in dem Sprachverbesserungsmodus auf einen zweiten Grad; wenn der Nachhallgrad in der Raumumgebung, die von den akustischen Parametern angegeben wird, größer ist als der erste Nachhallschwellenwert und kleiner als der zweite Nachhallschwellenwert, Anpassen des Enthallungsgrads in dem Sprachverbesserungsmodus derart, dass er zwischen dem ersten Grad und dem zweiten Grad liegt.

14. Die Vorrichtung nach Anspruch 9, wobei
der Sprachkollektor weiter eingerichtet ist, um ein Sprachsignal zu sammeln, das von dem Benutzer nach dem Aufweckwort gesendet wird,
und wobei die Befehlsausführungseinheit weiter eingerichtet ist, um:
das Sprachsignal zu einem Cloud-Server zu übertragen, der Merkmalzuordnung auf dem Sprachsignal ausführt und das Befehlswort aus dem Sprachsignal, auf dem die Merkmalzuordnung erfolgreich ist, erfasst; und
das Befehlswort, das von dem Cloud-Server zurückgegeben wird, zu empfangen, und die Ausrüstung zu steuern, um die Funktion, die dem Befehlswort entspricht, auszuführen.

15. Ein Nichtflüchtiges computerlesbares Speichermedium, in dem eine computerausführbare Anweisung gespeichert ist; wobei die computerausführbare Anweisung, wenn sie von einem Computer ausgeführt wird, den Computer veranlasst, das Enthallungssteuerungsverfahren nach einem der Ansprüche 1 bis 7 auszuführen.

## Revendications

1. Un procédé de commande de dé-réverbération d'un équipement de production de son, le procédé comprenant :
la collecte d'un signal vocal provenant d'un utilisateur en temps réel quand l'équipement effectue une lecture audio ;
l'acquisition d'une position relative de l'utilisateur par rapport à l'équipement et de paramètres acoustiques d'un environnement ambiant dans lequel l'utilisateur et l'équipement sont situés ;
en fonction d'un ou de plusieurs parmi la position relative et les paramètres acoustiques, la sélection d'un microphone correspondant dans l'équipement, et l'appel d'un mode d'amélioration vocale correspondant pour effectuer une dé-réverbération ;
l'acquisition d'un mot de commande vocale provenant de l'utilisateur, et la commande de l'équipement pour effectuer une fonction correspondant à la commande vocale, en tant que réponse à l'utilisateur.

2. Le procédé selon la revendication 1, dans lequel lors de l'acquisition de la position relative de l'utilisateur par rapport à l'équipement et à des paramètres acoustiques de l'environnement ambiant dans lequel l'utilisateur et l'équipement sont situés, le procédé comprend en outre :
la commande de l'équipement pour arrêter la lecture audio quand un mot de réveil est détecté à partir du signal vocal ; ou
la diminution d'un volume auquel l'équipement effectue la lecture audio, afin d'être en dessous d'un seuil de volume quand le mot de réveil est détecté à partir du signal vocal.

3. Le procédé selon la revendication 1, dans lequel l'acquisition d'une position relative de l'utilisateur par rapport à l'équipement et des paramètres acoustiques de l'environnement ambiant dans lequel l'utilisateur et l'équipement sont situés, comprend :
l'acquisition d'une direction et d'une distance de l'utilisateur par rapport à l'équipement en tant que position relative ; et
l'acquisition d'un temps de réverbération, d'un rapport direct sur réverbéré de la voix de l'utilisateur et d'un indice d'intelligibilité d'une voix collectée par l'équipement dans l'environnement ambiant dans lequel l'équipement et l'utilisateur sont situés, en tant que paramètres acoustiques.

4. Le procédé selon la revendication 1, dans lequel en fonction d'un ou de plusieurs parmi la position relative et les paramètres acoustiques, la sélection du microphone correspondant dans l'équipement, et l'appel du mode d'amélioration vocale correspondant pour effectuer la dé-réverbération comprennent :
en fonction d'un ou de plusieurs parmi la position relative et les paramètres acoustiques, la sélection de tous les microphones dans l'équipement en tant que microphones actuellement utilisés, et l'appel d'un mode d'amélioration vocale correspondant pour effectuer la dé-réverbération ; ou,
en fonction d'un ou de plusieurs parmi la position relative et les paramètres acoustiques, la sélection d'une partie des microphones dans l'équipement en tant que microphones actuellement utilisés, et l'appel d'un mode d'amélioration vocale correspondant pour effectuer la dé-réverbération.

5. Le procédé selon la revendication 3, dans lequel en fonction d'un ou de plusieurs parmi la position relative et les paramètres acoustiques, la sélection du microphone correspondant dans l'équipement, et l'appel du mode d'amélioration vocale correspondant pour effectuer la dé-réverbération comprennent :
l'établissement de priorités respectivement pour des facteurs comprenant la position relative et les paramètres acoustiques ;
d'une priorité la plus élevée à une priorité la plus basse, la mise en oeuvre de la dé-réverbération sur la base des facteurs un par un ; ou, la mise en oeuvre de la dé-réverbération uniquement sur la base d'un ou de plusieurs des facteurs qui ont une priorité plus élevée qu'un niveau prédéterminé.

6. Le procédé selon la revendication 4, dans lequel en fonction d'un ou de plusieurs parmi la position relative et les paramètres acoustiques, la sélection du microphone correspondant dans l'équipement, et l'appel du mode d'amélioration vocale correspondant pour effectuer la dé-réverbération comprennent au moins l'une des trois actions suivantes :
en fonction de la direction de l'utilisateur par rapport à l'équipement, la sélection du microphone correspondant dans l'équipement, et l'ajustement d'une direction sonore améliorée par le mode d'amélioration vocale pour effectuer la dé-réverbération ; ou,
quand la distance de l'utilisateur par rapport à l'équipement est inférieure à un premier seuil de distance, la réduction d'un degré de dé-réverbération et d'une fonction d'amplification vocale dans le mode d'amélioration vocale jusqu'à un premier niveau d'amélioration ; quand la distance de l'utilisateur par rapport à l'équipement est supérieure à un second seuil de distance, l'amélioration du degré de dé-réverbération et de la fonction d'amplification vocale dans le mode d'amélioration vocale jusqu'à un second niveau d'amélioration ; quand la distance de l'utilisateur par rapport à l'équipement est supérieure au premier seuil de distance et inférieure au second seuil de distance, l'ajustement du degré de dé-réverbération et de la fonction d'amplification vocale dans le mode d'amélioration vocale pour qu'ils soient entre le premier niveau d'amélioration et le second niveau d'amélioration ; ou,
quand un degré de réverbération dans l'environnement ambiant indiqué par les paramètres acoustiques est supérieur à un premier seuil de réverbération, l'amélioration du degré de dé-réverbération dans le mode d'amélioration vocale jusqu'à un premier degré ; quand le degré de réverbération dans l'environnement ambiant indiqué par les paramètres acoustiques est inférieur à un second seuil de réverbération, la réduction du degré de dé-réverbération dans le mode d'amélioration vocale jusqu'à un second degré ; quand le degré de réverbération dans l'environnement ambiant indiqué par les paramètres acoustiques est supérieur au premier seuil de réverbération et inférieur au second seuil de réverbération, l'ajustement du degré de dé-réverbération dans le mode d'amélioration vocale pour qu'il soit entre le premier degré et le second degré.

7. Le procédé selon la revendication 2, comprenant en outre :
la collecte d'un signal vocal envoyé par l'utilisateur après le mot de réveil ;
la transmission du signal vocal à un serveur en nuage qui effectue une mise en correspondance de caractéristiques sur le signal vocal et acquiert le mot de commande à partir du signal vocal lorsque que la mise en correspondance de caractéristiques est réussie ; et
la réception du mot de commande renvoyé par le serveur en nuage, et la commande de l'équipement pour effectuer la fonction correspondante en fonction du mot de commande.

8. Un dispositif de commande de dé-réverbération d'un équipement de production de son, le dispositif comprenant :
un collecteur de voix, qui est agencé pour, quand l'équipement effectue une lecture audio, collecter un signal vocal provenant d'un utilisateur en temps réel ;
une unité d'acquisition de facteur, qui est agencée pour acquérir une position relative de l'utilisateur par rapport à l'équipement et des paramètres acoustiques d'un environnement ambiant dans lequel l'équipement est situé ;
une unité de mise en oeuvre de dé-réverbération, qui est agencée pour, en fonction d'un ou de plusieurs parmi la position relative et les paramètres acoustiques, sélectionner un microphone correspondant dans l'équipement, et appeler un mode d'amélioration vocale correspondant pour effectuer une dé-réverbération ; et
une unité d'exécution de commande, qui est agencée pour acquérir un mot de commande vocale provenant de l'utilisateur, et commander l'équipement pour effectuer une fonction correspondant à la commande vocale, en tant que réponse à l'utilisateur.

9. Le dispositif selon la revendication 8, comprenant en outre :
une unité de commande de détection, qui est agencée pour, tout en acquérant la position relative de l'utilisateur par rapport à l'équipement et les paramètres acoustiques de l'environnement ambiant dans lequel l'équipement est situé :
quand un mot de réveil est détecté à partir du signal vocal, commander l'équipement pour arrêter la lecture audio ; ou
quand le mot de réveil est détecté à partir du signal vocal, diminuer un volume auquel l'équipement effectue la lecture audio, pour être en dessous d'un seuil de volume.

10. Le dispositif selon la revendication 8, dans lequel l'unité d'acquisition de facteur est agencée en outre pour :
acquérir une direction et une distance de l'utilisateur par rapport à l'équipement en tant que position relative ; et
acquérir un temps de réverbération, un rapport direct sur réverbéré de la voix de l'utilisateur et un indice d'intelligibilité d'une voix collectée par l'équipement dans l'environnement ambiant dans lequel l'équipement et l'utilisateur sont situés, en tant que paramètres acoustiques.

11. Le dispositif selon la revendication 8, dans lequel l'unité de mise en oeuvre de dé-réverbération est agencée en outre pour :
en fonction d'un ou de plusieurs parmi la position relative et les paramètres acoustiques, sélectionner tous les microphones dans l'équipement en tant que microphones actuellement utilisés, et appeler un mode d'amélioration vocale correspondant pour effectuer la dé-réverbération ; ou,
en fonction d'un ou de plusieurs parmi la position relative et les paramètres acoustiques, sélectionner une partie des microphones dans l'équipement en tant que microphones actuellement utilisés, et appeler un mode d'amélioration vocale correspondant pour effectuer la dé-réverbération.

12. Le dispositif selon la revendication 10, dans lequel l'unité de mise en oeuvre de dé-réverbération est agencée en outre pour :
établir des priorités respectivement pour des facteurs comprenant la position relative et les paramètres acoustiques ;
d'une priorité la plus élevée à une priorité la plus basse, effectuer la dé-réverbération sur la base des facteurs un par un ; ou, effectuer la dé-réverbération uniquement sur la base d'un ou de plusieurs des facteurs qui ont une priorité plus élevée qu'un niveau prédéterminé.

13. Le dispositif selon la revendication 11, dans lequel l'unité de mise en oeuvre de dé-réverbération est agencée pour effectuer au moins l'une des trois opérations suivantes :
en fonction de la direction de l'utilisateur par rapport à l'équipement, la sélection du microphone correspondant dans l'équipement, et l'ajustement d'une direction sonore améliorée par le mode d'amélioration vocale pour effectuer la dé-réverbération ; ou
quand la distance de l'utilisateur par rapport à l'équipement est inférieure à un premier seuil de distance, la réduction d'un degré de dé-réverbération et d'une fonction d'amplification vocale dans le mode d'amélioration vocale jusqu'à un premier niveau d'amélioration ; quand la distance de l'utilisateur par rapport à l'équipement est supérieure à un second seuil de distance, l'amélioration du degré de dé-réverbération et de la fonction d'amplification vocale dans le mode d'amélioration vocale jusqu'à un second niveau d'amélioration ; quand la distance de l'utilisateur par rapport à l'équipement est supérieure au premier seuil de distance et inférieure au second seuil de distance, l'ajustement du degré de dé-réverbération et de la fonction d'amplification vocale dans le mode d'amélioration vocale pour qu'ils soient entre le premier niveau d'amélioration et le second niveau d'amélioration ; ou
quand un degré de réverbération dans l'environnement ambiant indiqué par les paramètres acoustiques est supérieur à un premier seuil de réverbération, l'amélioration du degré de dé-réverbération dans le mode d'amélioration vocale jusqu'à un premier degré ; quand le degré de réverbération dans l'environnement ambiant indiqué par les paramètres acoustiques est inférieur à un second seuil de réverbération, la réduction du degré de dé-réverbération dans le mode d'amélioration vocale jusqu'à un second degré ; quand le degré de réverbération dans l'environnement ambiant indiqué par les paramètres acoustiques est supérieur au premier seuil de réverbération et inférieur au second seuil de réverbération, l'ajustement du degré de dé-réverbération dans le mode d'amélioration vocale pour qu'il soit entre le premier degré et le second degré.

14. Le dispositif selon la revendication 9, dans lequel
le collecteur de voix est agencé en outre pour collecter un signal vocal envoyé par l'utilisateur après le mot de réveil,
et dans lequel l'unité d'exécution de commande est agencée en outre pour:
transmettre le signal vocal à un serveur en nuage qui effectue une mise en correspondance de caractéristiques sur le signal vocal et acquiert le mot de commande à partir du signal vocal lorsque que la mise en correspondance de caractéristiques est réussie ; et
recevoir le mot de commande renvoyé par le serveur en nuage, et commander l'équipement pour effectuer la fonction correspondante en fonction du mot de commande.

15. Un support de stockage non transitoire lisible par ordinateur, dans lequel une instruction exécutable par ordinateur est stockée ; l'instruction exécutable par ordinateur, quand elle est exécutée par un ordinateur, amène l'ordinateur à mettre en oeuvre le procédé de commande de dé-réverbération selon l'une quelconque des revendications 1 à 7.
